(19) Europäisches Patentamt
European Patent Office
Office européen des brevets

(11) **EP 0 999 659 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(51) Int Cl.$^7$: **H04B 7/08**, H04B 17/00

(21) Anmeldenummer: **99121689.6**

(22) Anmeldetag: **02.11.1999**

(54) **Verfahren und Funkstation zur Funktionsprüfung von Empfangspfaden**

Method and base station for testing the operation of the reception branches

Procédé et station de base pour vérifier le fonctionnement des branches de réception

(84) Benannte Vertragsstaaten:
**DE FI FR GB IT SE**

(30) Priorität: **03.11.1998 DE 19850644**

(43) Veröffentlichungstag der Anmeldung:
**10.05.2000 Patentblatt 2000/19**

(73) Patentinhaber: **SIEMENS AKTIENGESELLSCHAFT
80333 München (DE)**

(72) Erfinder:
• **Heinz, Helmut
  86949 Windach (DE)**
• **Kunze, Holger
  81375 München (DE)**
• **Schreib, Franz
  81475 München (DE)**
• **Monschau, Jörg
  81379 München (DE)**

(56) Entgegenhaltungen:
DE-C- 19 823 523        US-A- 5 263 175
US-A- 5 634 204         US-A- 5 752 165

**Beschreibung**

Die Erfindung betrifft ein Verfahren und eine Funkstation zur Funktionsprüfung von Empfangspfaden.

In Funk-Kommunikationssystemen werden Informationen wie beispielsweise Sprache, Bildinformationen oder andere Daten, mit Hilfe von elektromagnetischen Wellen über eine Funkschnittstelle zwischen einer sendenden und einer empfangenden Funkstation, wie beispielsweise einer Basisstation bzw. einer Mobilstation für den Fall eines Mobilfunksystems, übertragen. Das Abstrahlen der elektromagnetischen Wellen erfolgt dabei mit Trägerfrequenzen, die in dem für das jeweilige System vorgesehenen Frequenzband liegen. Beim GSM-Mobilfunksystem (Global System for Mobile Communication) liegen die Trägerfrequenzen im Bereich von 900 MHz, 1800 MHz und 1900 MHz. Für zukünftige Mobilfunksysteme mit CDMA- und TD/CDMA- Übertragungsverfahren über die Funkschnittstelle, wie beispielsweise das UMTS (Universal Mobile Telecommunication System) oder andere Systeme der 3. Generation sind Trägerfrequenzen im Bereich von ca. 2000 MHz vorgesehen.

Unter reellen Einsatzbedingungen für Funk-Kommunikationssysteme sind gesendete Funksignale verschiedenartigsten Störungen bei der Übertragung über die Funkschnittstelle ausgesetzt und erreichen die Empfangseinrichtung auf sehr unterschiedlichen Ausbreitungswegen. Außer einem direkten Ausbreitungsweg können die Funksignale auch an Hindernissen wie Bergen, Bäumen, Gebäuden u.ä. reflektiert oder gebeugt werden. In der Empfangseinrichtung überlagern sich die Funksignale der verschiedenen Ausbreitungswege. Dies führt zu Auslöschungseffekten, die die Empfangsqualität der Funksignale mitunter stark verringern.

Um diese Auslöschungseffekte, auch Fadingeffekte genannt, zu umgehen, sind verschiedene Methoden bekannt. Durch Antennen-Diversität, d.h. durch die Verwendung von mehreren Antennen für den Empfang der Funksignale können diese Fadingeffekte reduziert werden. Da jedoch der Einsatz der Antennen-Diversität eine Erhöhung der kosten und Komplexität in der Funkstation bedeutet, wird sie vor allem in den Basisstationen der Funk-Kommunikationssysteme eingesetzt.

Ein Ausfall eines Empfangspfades ist beim Einsatz der Antennen-Diversität gemäß dem Stand der Technik nur durch Prüfung der jeweiligen Empfangspfade im abgeschalteten Zustand möglich. Dieses bewirkt nachteilig, daß die Funkressourcen für den Zeitraum der Funktionsprüfung nicht genutzt werden können, so daß die Prüfung vor allem in Zeiten mit geringem Verkehrsaufkommen durchgeführt werden muß. Weiterhin muß die Prüfung direkt am Ort der Funkstation durchgeführt werden, welches nachteilig einen hohen technischen und zeitlichen Aufwand für den Betreiber des Funk-Kommunkationssystems bewirkt, wenn die Funkstation beispielsweise an einem abgelegenen Ort installiert ist.

Aus US 5 752 165 ist ein Verfahren zur Funktionsprüfung von Empfangspfaden in einer Funkstation bekannt, bei dem für die Empfangspfade jeweils ein Mittelwert der Signalpegel für die empfangenen Signale gebildet wird und bei dem die Differenz dieser Mittelwerte berechnet wird.

Der Erfindung liegt die Aufgabe zugrunde, ein Verfahren und eine Funkstation anzugeben, die eine einfache Funktionsprüfung von Empfangspfaden in einer Funkstation ermöglichen. Diese Aufgabe wird durch das Verfahren und durch die Funkstation gemäß den Merkmalen der unabhängigen Patentansprüche gelöst. Weiterbildungen der Erfindung sind den Unteransprüchen zu entnehmen.

Erfindungsgemäß wird in einer Funkstation eines Funk-Kommunikationssystems, die mindestens zwei Antenneneinrichtungen für einen Diversitätsempfang von über eine Funkschnittstelle gesendeten Signalen für die Empfangspfade jeweils zumindest ein charakteristischer Wert bezüglich von Übertragungseigenschaften der Funkschnittstelle ermittelt. Eine Differenz zwischen den ermittelten charakteristischen Werten wird anschließend mit zumindest einem Schwellenwert verglichen, und aus dem Vergleich die Funktion der Empfangspfade abgeleitet.

Erfindung gemäß wird der jeweils ermittelte charakteristische Wert mit einem weiteren Schwellenwert verglichen. Bei einem Überschreiten dieses weiteren Schwellenwertes werden die charakteristischen Werte für die Berechnung der Differenz berücksichtigt. Dies ermöglichtes, daß beispielsweise für den Fall, daß die Differenz zwischen einem empfangenen Signal und dem normalen Rauschen der Empfangseinrichtung sehr gering ist, die ermittelten charakteristischen Werte der Empfangszweige nicht berücksichtigt werden und somit ein nachfolgend eventuell fehlerhaft festgestellter Defekt eines Empfangszweigs vermieden wird. Weiterhin kann hierdurch vorteilhaft ein gleichzeitig auftretender Ausfall aller Empfangspfade detektiert werden, da für diesen speziellen Fall der Vergleich mit dem Schwellenwert gegebenenfalls keinen Hinweis auf einen defekten Empfangspfad liefern kann. Der weitere Schwellenwert kann beispielsweise einem minimalen charakteristischen Wert entsprechen.

Die Erfindung ermöglicht vorteilhaft, daß durch einen einfachen Vergleich von charakteristischen Werten die Funktion der Empfangspfade ermittelt werden kann. Dieser Vergleich kann während des normalen Betriebs der Funkstation durchgeführt werden, wodurch vorteilhaft keine Beschränkung der Funkressourcen für die Funktionsprüfung auftritt. Des weiteren wird durch die Erfindung vorteilhaft eine permanente Ermittlung der Funktion der Empfangspfade ermöglicht, so daß schnell auf auftretende Störungen reagiert werden kann. Weiterhin kann die Überwachung der Empfangspfade beispielsweise in einer zentralen Einrichtung des Funk-Kommunikationssystem erfolgen.

Gemäß einer ersten Weiterbildung der Erfindung wird die Differenz zwischen den jeweils ermittelten charakteristischen Werten mit einem oberen und einem unteren Schwellenwert verglichen, und aus dem Vergleich die jeweilige Funktion der Empfangspfade abgeleitet. Dieses ermöglicht vorteilhaft, daß bestimmt werden kann, welcher der Empfangspfade nicht ordnungsgemäß funktioniert bzw. defekt ist.

Einer weiteren Ausgestaltung der Erfindung zufolge wird die Differenz zwischen Durchschnittswerten der charakteristischen Werte ermittelt, wobei die Durchschnittswerte über ein vorgegebenes Zeitintervall bestimmt werden. Durch die Bestimmung von Durchschnittswerten werden vorteilhaft Schwankungen der charakteristischen Werte für die Empfangspfade beispielsweise durch Abschattungen relativiert und gemittelt, so daß vorteilhaft eine genauere Aussage über die Funktion der Empfangspfade getroffen werden kann. Die Durchschnittswerte können dabei beispielsweise durch eine kontinuierliche Mittelung der charakteristischen Werte ermittelt werden, wobei jeweils Erfahrungswerte eines der aktuellen Ermittlung vorrausgehenden Zeitintervalls berücksichtigt werden. Weiterhin ist bei einem Einsatz eines TDMA-Teilnehmerseparierungsverfahrens in dem Funk-Kommunikationssystems eine Mittelung über eine bestimmte Anzahl Zeitschlitze denkbar.

In drei alternativen Ausgestaltungen der Erfindung wird bei einem Überschreiten und/oder bei einem Unterschreiten des Schwellenwertes gemäß einer ersten Ausführungsform ein Alarmsignal generiert, das die Empfangspfade als defekt kennzeichnet, gemäß einer zweiten Ausführungsform die Empfangspfade als defekt markiert, oder gemäß einer dritten Ausführungsform der jeweilige Empfangspfad als defekt markiert. Vorteilhaft kann hierdurch beispielsweise die Kontrolle der Funktion der Empfangspfade in einer zentralen Einrichtung des Funk-Kommunikationssystems erfolgen, wobei eine auftretende fehlerhafte Funktion dem Betreiber signalisiert wird.

Basierend auf der zweiten alternativen Ausführungsform wird gemäß einer weiterer Ausgestaltung der Erfindung eine Gesamtsumme Markierungen in dem vorgegebenen Zeitintervall ermittelt und mit einem maximalen Summenschwellenwert verglichen. Basierend auf der dritten alternativen Ausführungsform wird gemäß einer weiteren Ausgestaltung für die Empfangspfade eine jeweilige Summe Markierungen in dem vorgegebenen Zeitintervall ermittelt, eine Gesamtsumme der Summen Markierungen für die jeweiligen Empfangspfade berechnet, und die Gesamtsumme mit einem maximalen Summenschwellenwert verglichen. Nachfolgend wird entsprechend zweier weiterer alternativer Weiterbildungen bei einem Überschreiten des maximalen Summenschwellenwertes ein Alarmsignal generiert bzw. basierend auf der dritten Ausführungsform die jeweiligen Summen Markierungen miteinander verglichen und aus dem Vergleich ein Alarmsignal generiert, das den einen und/oder den anderen Empfangspfad als defekt kennzeichnet.

Diese erfindungsgemäßen Ausgestaltungen ermöglichen vorteilhaft eine sehr genaue Bestimmung eines Defekts eines oder mehrerer Empfangspfade, wobei durch die Ermittlung der Gesamtsummen und deren Vergleich mit einem Summenschwellenwert eine zusätzliche Kondition zur Feststellung von defekten Empfangspfaden geschaffen wird. Anhand der Summen der Markierungen kann zudem ein teilweiser oder kompletter Ausfalls eines oder mehrerer Empfangspfade detektiert werden.

Besonders vorteilhaft wird das erfindungsgemäße Verfahren in einem Funk-Kommunikationssystem eingesetzt, das ein TDMA-Teilnehmerseparierungsverfahren bzw. eine Kombinationen eines TDMA-Verfahrens mit weiteren Teilnehmerseparierungsverfahren nutzt. Diesen Verfahren gemeinsam ist eine parallele Nutzung eines Frequenzbandes für mehrere Kommunikationsverbindungen, wobei die einzelnen Verbindungen durch Zeitschlitze unterschieden werden. Bei einer Kombination mit einer CDMA-Teilnehmerseparierung erfolgt eine zusätzliche Trennung der Teilnehmer durch eine jeweilige Zuordnung zu Spreizkodes.

Die Erfindung wird nun anhand von zeichnerischen Darstellungen näher erläutert. Dabei zeigen

FIG 1      ein Blockschaltbild eines Funk-Kommunikationssystems, insbesondere eines Mobilfunksystems,

FIG 2      eine beispielhafte schematische Darstellung der Rahmenstruktur der Funkschnittstelle bei einem TDMA-Teilnehmerseparierungsverfahren und des Aufbaus eines Funkblocks,

FIG 3      eine beispielhafte schematische Darstellung der Rahmenstruktur der Funkschnittstelle bei einem TD/CDMA-Teilnehmerseparierungsverfahren und des Aufbaus eines Funkblocks,

FIG 4      ein Ablaufdiagramm gemäß dem stand der Technik,

FIG 5      ein Ablaufdiagramm des erfindungsgemäßen Verfahrens, mit einer zusätzlichen Ermittlung von Durchschnittswerten,

FIG 6      ein Ablaufdiagramm des erfindungsgemäßen Verfahrens, mit einer parallelen Ermittlung jeweils zweier charakteristischer Werte,

FIG 7      ein Ablaufdiagramm des erfindungsgemäßen Verfahrens, mit einer Summenbildung von Markierungen, und

FIG 8      ein weiteres Ablaufdiagramm des erfindungsgemäßen Verfahrens, mit einer Ermittlung eines defekten Empfangspfads.

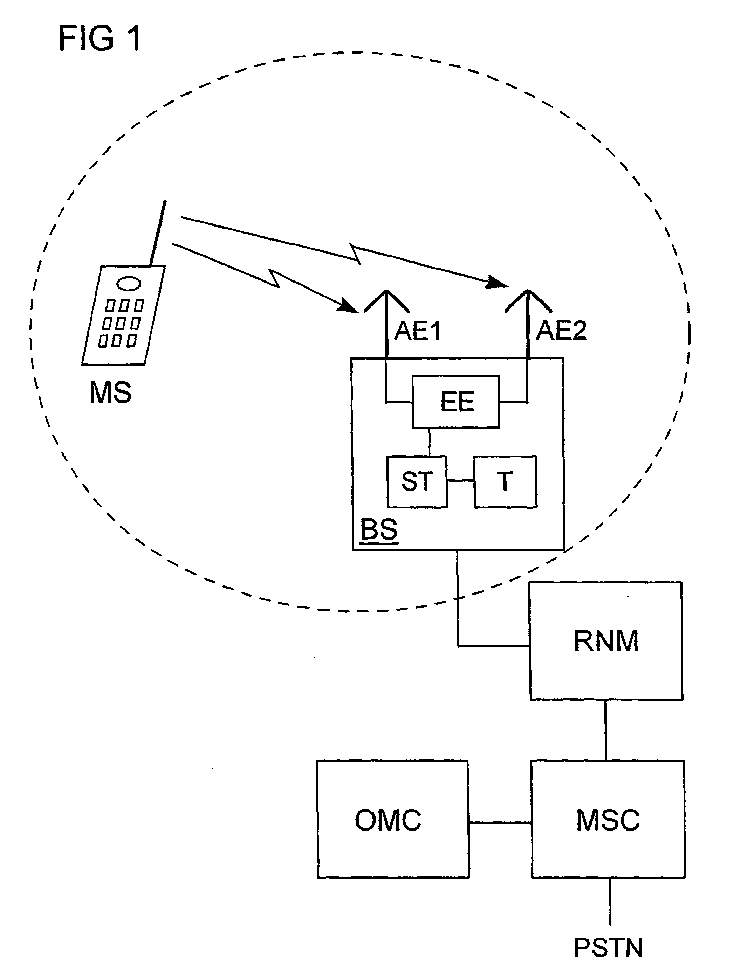

Das in der FIG 1 dargestellte und als ein Mobilfunksystem ausgeführte Funk-Kommunikationssystem besteht aus einer Vielzahl von Mobilvermittlungsstellen MSC, die untereinander vernetzt sind bzw. den Zugang zu einem Festnetz PSTN herstellen. Die Mobilvermittlungsstellen MSC sind jeweils mit einem Operations- und Wartungszentrum OMC verbunden, das eine zentrale Verwaltung von das Funk-Kommunikationssystem betreffenden Funktionen gestattet. Weiterhin sind diese Mobilvermittlungsstellen MSC mit jeweils zumindest einer Einrichtung RNM zum Zuteilen funktechnischer Ressourcen verbunden. Jede dieser Einrichtungen RNM ermöglicht wiederum eine Verbindung zu zumindest einer Basisstation BS. Eine solche Basisstation BS ist eine Funkstation, die über eine Funkschnittstelle Verbindungen zu weiteren Funkstationen, wie beispielsweise Mobilstationen oder stationären Endgeräten, aufbauen kann. Durch jede Basisstation BS wird zumindest eine Funkzelle gebildet, in dessen Bereich befindliche Mobilstationen mit funktechnischen Ressourcen versorgt werden. Bei einer Sektorisierung oder bei hierarchischen Zellstrukturen können pro Basisstation BS auch mehrere Funkzellen versorgt werden. Die Funktionalität der dargestellten Struktur wird von dem Funk-Kommunikationssystem nach der Erfindung genutzt.

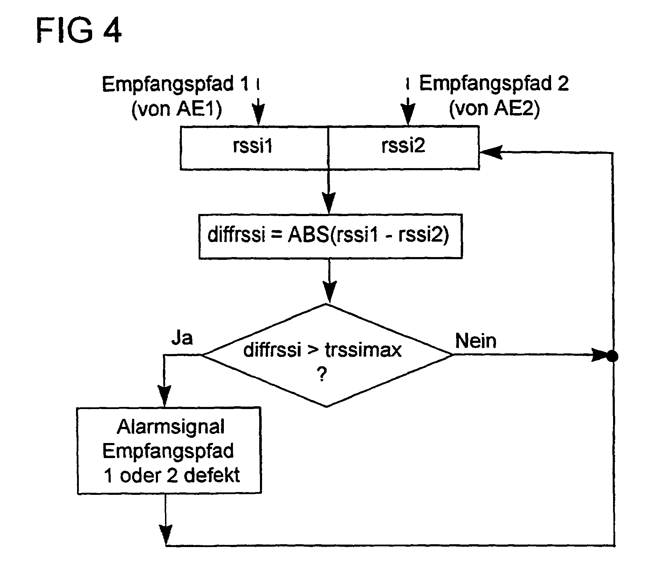

Unter reellen Einsatzbedingungen für Funk-Kommunikationssysteme sind die Funksignale zwischen der Basisstation BS und der beispielhaft angegebenen Funkstation MS verschiedenartigsten Störungen ausgesetzt und erreichen die Funkstation MS auf sehr unterschiedlichen Ausbreitungswegen. Außer einem direkten Ausbreitungsweg können die Funksignale auch an Hindernissen wie Bergen, Bäumen, Gebäuden u.ä. reflektiert oder gebeugt werden. In der Empfangseinrichtung der Funkstation MS überlagern sich die Funksignale der verschiedenen Ausbreitungswege, welches zu Auslöschungseffekten führt, die den Empfang der Funksignale stark beeinträchtigen können. Die Basisstation BS ist aus diesem Grund mit zwei Antenneneinrichtungen AE für einen Diversitätsempfang ausgestaltet, wodurch die Fading genannten Auslöschungseffekte korrigiert werden können. Die Funkstation MS weist dahingegen im Regelfall nur eine Antenneneinrichtung AE auf, beispielsweise für Datenübertragung können Funkstationen MS jedoch ebenfalls mit zwei Antenneneinrichtungen ausgestattet werden. Für ein Empfangen von Nutz- und Signalisierungeinformationen weist die Basisstationen BS eine mit den Antenneneinrichtungen AE1, AE2 verbundene Empfangseinrichtung EE auf. Neben dieser Empfangseinrichtung EE sind in der Basisstation BS weitere Komponenten und Einrichtungen wie eine beispielhaft angegebene Steuereinrichtung ST und ein Timer T verwirklicht, dessen relevanten Funktionen in der Beschreibung zu den FIG 4 bis FIG 8 beschrieben werden.

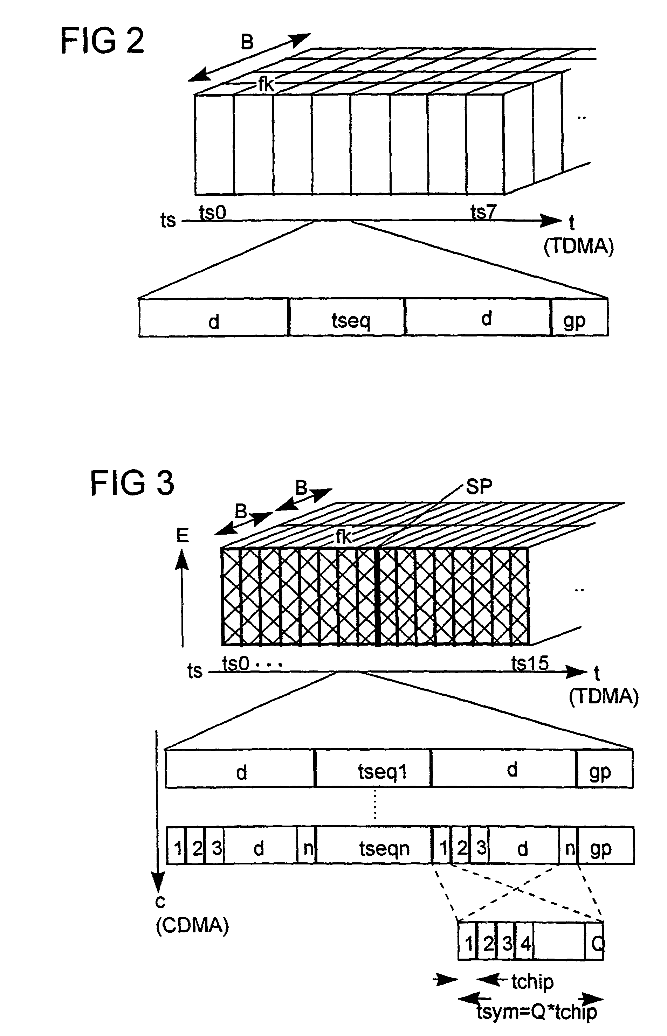

Die Rahmenstruktur der Funkschnittstelle ist aus der FIG 2 ersichtlich und entspricht der bekannten Funkschnittstelle eines GSM-Mobilfunksystems. Gemäß einer FDMA-Komponente ist eine Aufteilung eines breitbandigen Frequenzbereiches B, beispielsweise der Bandbreite B = 1,6 MHz, in mehrere Frequenzkanäle fk, beispielsweise acht Frequenzkanäle mit jeweils 200 kHz Bandbreite, vorgesehen. Weiterhin erfolgt gemäß einer TDMA-Komponente eine Aufteilung in Zeitschlitze ts, beispielsweise 8 Zeitschlitze ts0 bis ts7. Jeder Zeitschlitz ts innerhalb eines Frequenzkanals fk bildet einen physikalischen Übertragungskanal. Die aufeinanderfolgenden Zeitschlitze ts werden nach einer Rahmenstruktur gegliedert, so daß acht Zeitschlitze ts0 bis ts7 zu einem Zeitrahmen tf zusammengefaßt werden.

Innerhalb der Frequenzkanäle fk, die zur Nutzdatenübertragung vorgesehen sind, werden Informationen mehrerer Verbindungen zeitlich getrennt in Funkblöcken übertragen. Diese Funkblöcke bestehen aus Abschnitten mit Daten d, in denen jeweils Abschnitte mit empfangsseitig bekannten Trainingssequenzen tseq eingebettet sind. Weiterhin ist innerhalb des Zeitschlitzes ts eine Schutzzeit gp zur Kompensation unterschiedlicher Signallaufzeiten der Verbindungen aufeinanderfolgender Zeitschlitze ts vorgesehen.

Eine beispielhafte Rahmenstruktur der Funkschnittstelle, wie sie unter anderem in dem zukünftigen Mobilfunksystem der dritten Generation UMTS (Universal Mobile Telecommunications System) verwirklicht wird, ist aus der FIG 3 ersichtlich. Gemäß einer TDMA-Komponente ist eine Aufteilung eines breitbandigen Frequenzbandes, beispielsweise der Bandbreite B = 5 MHz, in mehrere Zeitschlitze ts, beispielsweise 16 Zeitschlitze ts0 bis ts15 vorgesehen. Jeder Zeitschlitz ts innerhalb des Frequenzbandes B bildet einen Frequenzkanal fk. Innerhalb eines breitbandigen Frequenzbandes B werden die aufeinanderfolgenden Zeitschlitze ts nach einer Rahmenstruktur gegliedert. So werden 16 Zeitschlitze ts0 bis ts15 zu einem Rahmen zusammengefaßt.

Bei einer Nutzung eines TDD-Übertragungsverfahrens wird ein Teil der Zeitschlitze ts0 bis ts15 in Aufwärtsrichtung und ein Teil der Zeitschlitze ts0 bis ts15 in Abwärtsrichtung benutzt, wobei die Übertragung in Aufwärtsrichtung beispielsweise vor der Übertragung in Abwärtsrichtung erfolgt. Dazwischen liegt ein Umschaltzeitpunkt SP, der entsprechend dem jeweiligen Bedarf an Übertragungskanälen für die Auf- und Abwärtsrichtung flexibel positioniert werden kann. Ein Frequenzkanal fk für die Aufwärtsrichtung entspricht in diesem Fall dem Frequenzkanal fk für die Abwärtsrichtung. In gleicher Weise sind die weiteren Frequenzkanäle fk strukturiert.

Wie zu der FIG 2 beschrieben werden innerhalb der Frequenzkanäle fk Informationen mehrerer Verbindungen in Funkblöcken übertragen. Diese Funkblöcke bestehen aus Abschnitten mit Daten d, in denen jeweils Abschnitte mit empfangsseitig bekannten Trainingssequenzen tseq1 bis tseqn eingebettet sind. Die Daten d sind verbindungsindividuell mit einer Feinstruktur, einem Spreizkode c (CDMA-Kode), gespreizt, so daß empfangsseitig beispielsweise n Verbindungen durch diese CDMA-Komponente separierbar sind. Aus der Kombination aus einem Frequenzkanal fk und einem Spreizkode c wird ein physikalischer Übertragungskanal definiert, der für die Übertragung von Signalisierungs- und Nutzinformationen genutzt werden kann.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen Spreizkode c. Weiterhin ist innerhalb des Zeitschlitzes ts eine Schutzzeit gp zur Kompensation unterschiedlicher Signallaufzeiten der Verbindungen aufeinanderfolgender Zeitschlitze ts vorgesehen.

Eine Anwendung des erfindungsgemäßen Verfahrens ist beispielsweise auch für ein bekanntes CDMA-Teilnehmerseparierungsverfahren möglich, bei dem ein physikalischer Übertragungskanal durch ein Frequenzband B und einen CDMA-Kode definiert wird, und eine kontinuierliche Übertragung von Nutzund Signalisierungsinformationen erfolgt.

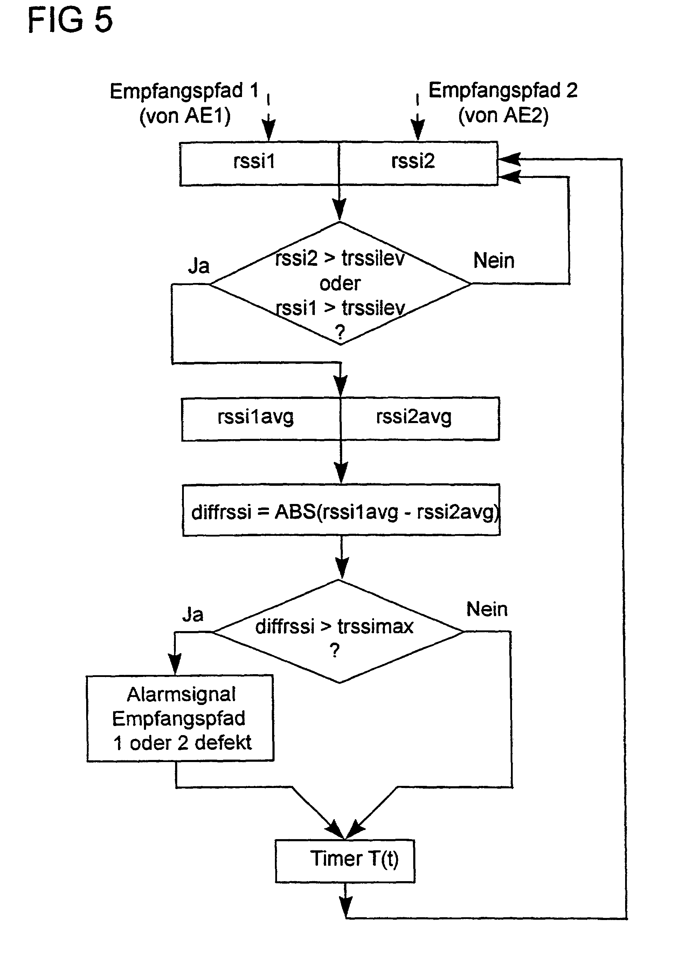

In den FIG 5 bis FIG 8 sind beispielhafte Ablaufdiagramme für das erfindungsgemäße Verfahren dargestellt. Die verschiedenen Funktionen werden beispielsweise in der Steuereinrichtung ST durchgeführt, wobei eine Ermittlung der charakteristischen Werte auch in der Empfangseinrichtung EE erfolgen kann. Den jeweiligen Abfolgen werden von den beiden Antenneneinrichtungen AE1, AE2 und der Empfangseinrichtung EE der Basisstation BS empfangene Signale zweier unabhängiger Empfangspfade 1 und 2 zugrunde gelegt.

In dem Ablaufdiagramm der FIG 4 werden die empfangenen Signale der Steuereinrichtung ST in der Basisstation BS zugeführt, die aus den Eigenschaften der Signale für jeden Empfangszweig 1, 2 jeweils einen charakteristischen Wert bezüglich der Übertragungseigenschaften der Funkschnittstelle bestimmt. Ein derartiger charakteristischer Wert, der sich gegebenenfalls erst nach internen Umrechnungen in der Steuereinrichtung ST ergibt, ist beispielsweise eine Empfangsstärke rssi1, rssi2 oder ein Signal-Rausch-Verhältnis snr1, snr2. Gemäß dem Stand der Technik des GSM-Mobilfunksystems wird der ermittelte charakteristische Wert zur Abschätzung der erforderlichen Sendeleistung für die Signalübertragung verwendet.

In einem folgenden Schritt wird der Absolutbetrag der Differenz zwischen den ermittelten Empfangsstärken rssi1, rssi2 ermittelt. Anschließend wird die Differenz Empfangsstärke diffrssi mit einem beispielhaft angegebenen oberen Schwellenwert trssimax für die Empfangsstärke verglichen. Bei einem Überschreiten des oberen Schwellenwertes trssimax wird ein Alarmsignal generiert, das einen Defekt eines der beiden Empfangspfade angibt. Das Alarmsignal kann beispielsweise zu dem Operations- und Wartungszentrum OMC des Mobilfunksystems übertragen werden, in dem zentral die Funktion der Empfangspfade der gesamten an die Mobilvermittlungsstelle MSC angeschlossenen Basisstationen BS überwacht werden kann.

In dem auf der FIG 4 basierenden erfindungsgemäßen Ablaufdiagramm der FIG 5 werden die ermittelten Empfangsstärken rssi1, rssi2 der Empfangspfade zusätzlich mit einem weiteren Schwellenwert trssilev verglichen, wobei die jeweiligen Werte rssi1, rssi2 nur bei einem Überschreiten des weiteren Schwellenwertes trssilev durch einen der Werte rssi1, rssi2 der Weiterverarbeitung zugeführt werden. Hierdurch werden niedrige ermittelte Empfangsstärken rssi1, rssi2 aufgrund von sehr schwachen Empfangssignalen, die sich gegenüber dem normalen Rauschen der Empfangspfade kaum unterscheiden, nicht berücksichtigt. Die weiterzuverarbeitenden Werte rssi1, rssi2 müssen sich demnach von dem Grundrauschen unterscheiden. Weiterhin wird verhindert, daß für den Fall eines gleichzeitigen Defekts beider Empfangspfade durch die nachfolgenden Prozeduren eine Funktion der Empfangspfade vorgetäuscht wird. Hierbei ist denkbar, daß bei einem gehäuften und gleichzeitigen Auftreten der Unterschreitung des weiteren Schwellenwertes trssilev für beide Empfangspfade 1, 2 ein Alarmsignal ausgelöst wird (nicht in der FIG 5 dargestellt).

Aus den der Weiterverarbeitung zugeführten ermittelten Empfangsstärken rssi1, rssi2 wird nachfolgend jeweils ein Durchschnittswert rssi1avg, rssi2avg innerhalb eines vorgegebenen Zeitintervalls t bestimmt. Die Differenz Empfangsstärke diffrssi berechnet sich in diesem Fall aus dem Absolutbetrag der Differenz der ermittelten durchschnittlichen Empfangsstärken rssi1avg, rssi2avg.

Das Dauer des Zeitintervalls t wird durch einen Timer T in der Basisstation BS gesteuert. Bei dem beispielhaft genannten GSM-Mobilfunksystem kann das Zeitintervall t beispielsweise einer Anzahl Zeitschlitze oder Zeitrahmen entsprechen, wobei für die einzelnen Zeitschlitze bzw. Verbindungen jeweils der Durchschnittswert über das Zeitintervall t ermittelt wird. Eine weitere beispielhafte Möglichkeit zur Ermittlung von Durchschnittswerten ist eine kontinuierliche Mittelung, wobei nur die aktuellen und die in einem bestimmten zurückliegenden Zeitintervall t ermittelten Werte für die Berechnung des jeweiligen Durchschnittswertes rssi1avg, rssi2avg berücksichtigt werden. Werden beispielsweise zur Ermittlung des Durchschnittswertes rssi1avg des Empfangszweigs 1 n-Messungen der Empfangsstärke rssi1 durchgeführt, so errechnet sich der jeweils aktuelle Durchschnittswert rssi1avg:

$$rssi1avg_n = f * rssi1avg_{n-1} + (1 - f) * rssi1_n$$

wobei $0 < f < 1$ ein Gewichtungsfaktor ist, der den vorhergehenden Durchschnittswert im Verhältnis zum aktuell ermittelten Wert gewichtet.

Die Dauer des Zeitintervalls t, die jeweiligen Schwellenwerte sowie der Gewichtungsfaktor f können beispielsweise in dem bereits erwähnten Operations- und Wartungszentrum OMC administriert und flexibel den jeweiligen Bedingungen angepaßt werden.

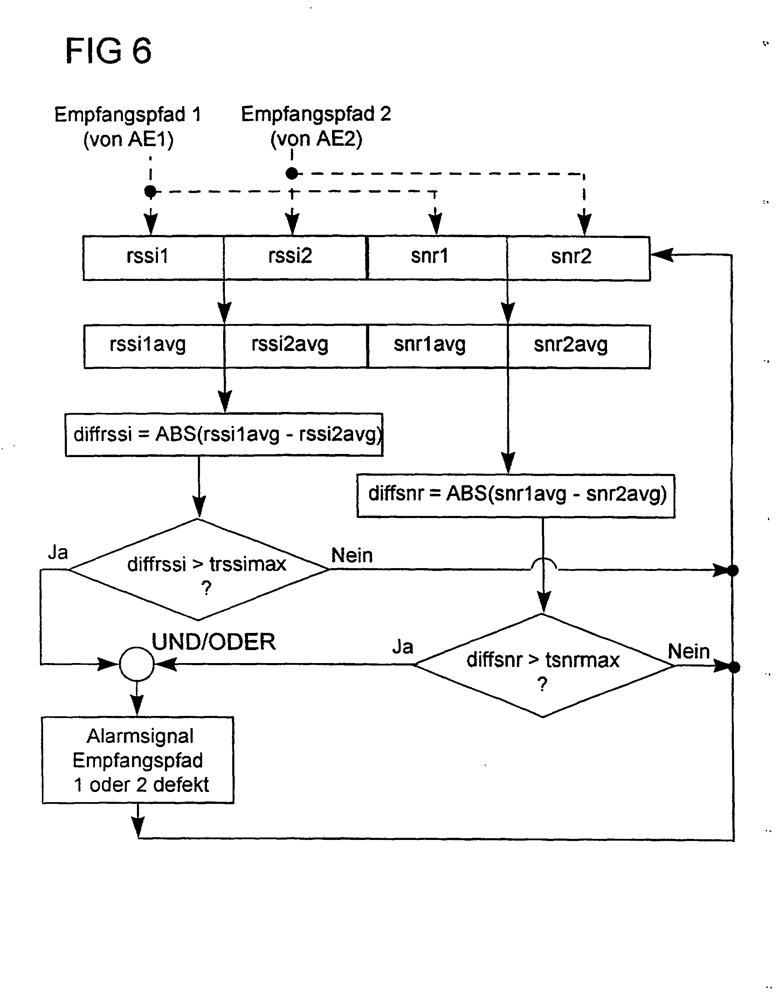

In der FIG 6 wird aus den empfangenen Signalen neben der Empfangsstärke rssi1, rssi2 zusätzlich das Signal-Rausch-Verhältnis snr1, snr2 für die Empfangszweige ermittelt. Ein den Erläuterungen zu der FIG 5 entsprechenden Vergleich der ermittelten Empfangsstärken rssi1, rssi2 mit einem weiteren Schwellenwert trssimax kann dabei ebenfalls durchgeführt werden. Gemäß den Beispielen der FIG 5 werden weiterhin jeweils Durchschnittswerte Empfangsstärke rssi1avg, rssi2avg und Signal-Rausch-Verhältnis snrlavg, snr2avg berechnet. Anschließend werden die Differenzen Empfangsstärke diffrssi bzw. Signal-Rausch-Verhältnis diffsnr mit jeweils einem oberen Schwellenwert Empfangsstärke trssimax bzw. Signal-Rausch-Verhältnis tsnrmax verglichen. Bei einem jeweiligen Überschreiten der oberen Schwellenwerte trssimax, tsnrmax wird ein Alarmsignal der bekannten Form ausgelöst. Der Zusammenführungspunkt kann beispielsweise entsprechend einer UND- oder eine ODER-Verknüpfung konfiguriert sein, wobei bei der ersten Ausgestaltung gemäß einer UND-Verknüpfung zum Auslösen des Alarmsignals beide Differenzwerte diffrssi und diffsnr größer dem jeweils oberen Schwellenwert trssimax bzw. tsnrmax sein müssen, währenddessen bei der zweiten Ausgestaltung gemäß einer ODER-Verknüpfung nur der eine Differenzwert diffrssi bzw. diffsnr größer als der jeweilige obere Schwellenwert trssimax bzw. tsnrmax sein muß, um das Alarmsignal auszulösen.

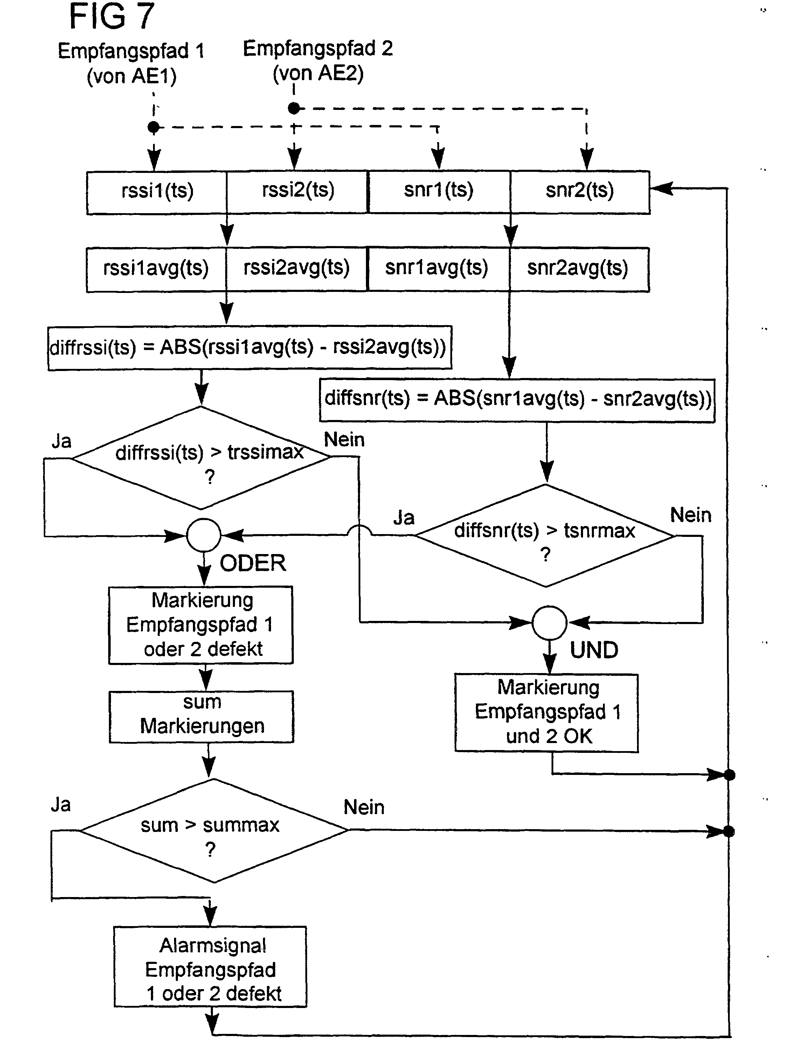

Das in der FIG 7 dargestellte Ablaufdiagramm basiert auf dem Ausführungsbeispiel der FIG 6, wobei von einer zeitschlitzbezogenen Ermittlung der charakteristischen Werte rssi1, rssi2, snr1, snr2, wie sie bei einem Einsatz des Verfahrens in dem beispielhaften GSM-Mobilfunksystem sinnvoll ist, ausgegangen wird. Nach dem Vergleich der Differenzwerte diffrssi(ts), diffsnr(ts) mit jeweils einem oberen Schwellenwert trssimax bzw. tsnrmax werden bei einem jeweiligen Überschreiten der Schwellenwerte trssimax, tsnrmax die Empfangspfade 1 und 2 als defekt markiert. Der Zusammenführungspunkt entspricht in diesem Fall beispielhaft einer ODER-Verknüpfung, so daß auch bei einem Überschreiten nur eines oberen Schwellenwertes die Empfangspfade 1 und 2 als defekt markiert werden. Über ein bestimmtes Zeitintervall t, wie beispielsweise eine bestimmte Anzahl Zeitschlitze ts, wird eine Gesamtsumme sum Markierungen berechnet und diese mit einem maximalen Summenschwellenwert summmax verglichen. Bei einem Überschreiten dieses maximale Summenschwellenwert summax wird ein Alarmsignal beispielsweise zu dem Operations- und Wartungszentrum OMC ausgesendet, das die Empfangspfade 1 oder 2 als defekt kennzeichnet. Bei einem jeweiligen Unterschreiten der Schwellenwerte trssimax, tsnrmax für die Differenzwerte diffrssi(ts), diffsnr(ts) werden die Empfangspfade 1 und 2 als ordnungsgemäß funktionierend markiert. Der Zusammenführungspunkt kann hierbei beispielsweise einer UND-Verknüpfung entsprechen, wobei gegebenenfalls eine Bestätigungsnachricht über die Funktion zu dem Operations- und Wartungszentrum OMC gesendet werden kann. Für den Fall, daß die Gesamtsumme sum den maximalen Summenschwellenwert summax nicht überschreitet, kann beispielsweise ein Warnsignal gesendet werden, daß eine erhöhte Fehlerhäufigkeit kennzeichnet, so daß seitens des Betreibers gegebenenfalls präventive Maßnahmen getroffen werden können.

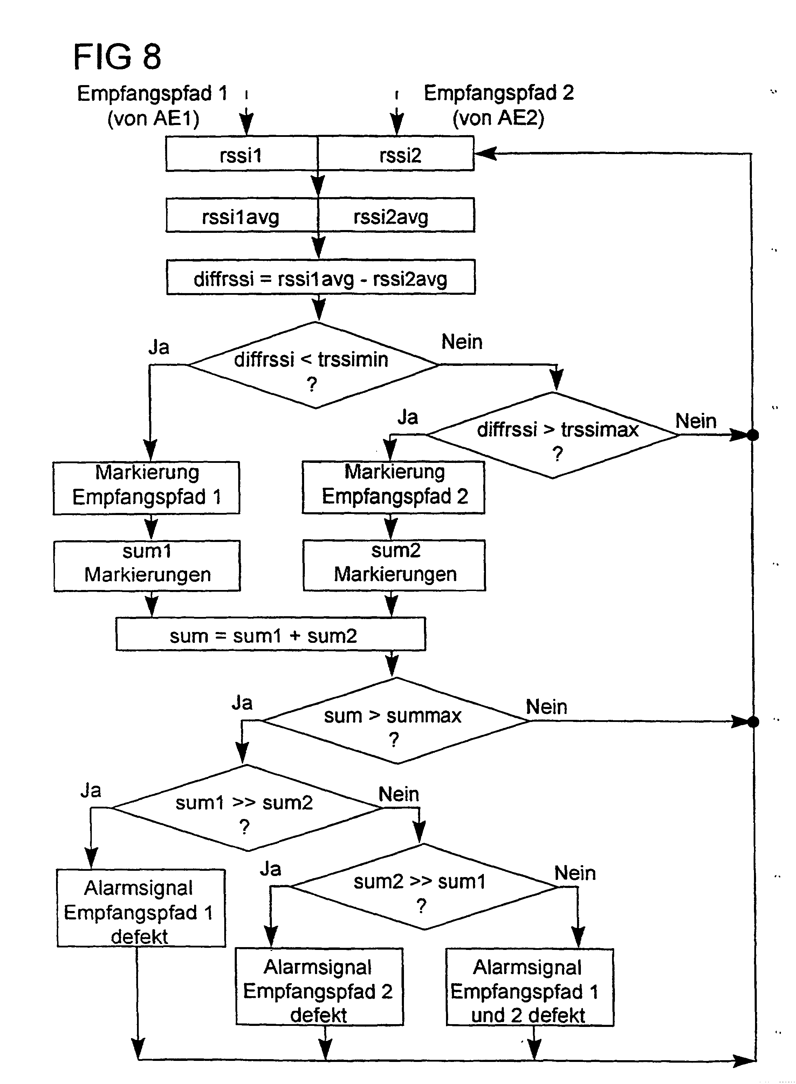

In dem Ablaufdiagramm der FIG 8 wird wiederum nur die Vorgehensweise bei einer Ermittlung der jeweiligen Empfangsstärken rssi1, rssi2 der Empfangspfade 1 und 2 betrachtet, eine Erweiterung um die Ermittlung der Signal-Rausch-Abstände snr1, snr2 im Sinne der Beispiele der FIG 6 und FIG 7 ist jedoch ebenfalls denkbar. Die aus den Durchschnittswerten rssiavg1, rssiavg2 berechnete Differenz Empfangsstärke diffrssi wird mit einem unteren Schwellenwert Empfangsstärke trssimin und mit einem oberen Schwellenwert Empfangsstärke trssimax verglichen, wobei in diesem Fall nicht der Absolutwert der Differenz der Empfangsstärken rssi1avg, rssi2avg bestimmt wird. Ist die Differenz Empfangsstärke diffrssi kleiner als der untere Schwellenwert Empfangsstärke trssimin, so wird der Empfangspfad 1 als defekt markiert und die Summe sum1 Markierungen für den Empfangspfad 1 über ein bestimmtes Zeitintervall t bestimmt. In gleicher Weise wird der Empfangspfad 2 als defekt markiert und die Summe sum2 Markierungen bestimmt, wenn die Differenz Empfangsstärke diffrssi größer als der obere Schwellenwert Empfangsstärke trssimax ist. Die anschließend berechnete Gesamtsumme sum der Summen Markierungen sum1, sum2 wird mit einem oberen Schwellenwert Markierungen summax verglichen und bei einem Überschreiten des Schwellenwertes summax ein Vergleich der bestimmten Summen Markierungen sum1, sum2 der beiden Empfangspfade durchgeführt. Ist die Summe Markierungen sum1 für den Empfangspfad 1 viel größer als die Summe Markierungen sum2 für den Empfangspfad 2, so wird ein Alarmsignal ausgelöst, das den Empfangspfad 1 als defekt kennzeichnet. Ist hingegen die Summe Markierungen sum2 für den Empfangspfad 2 viel größer als die Summe Markierungen sum1 für den Empfangspfad 1, so wird ein Alarmsignal ausgelöst, das den Empfangspfad 2 als defekt kennzeichnet. Trifft auch dieses nicht zu, so wird ein Alarmsignal ausgelöst, daß beide Empfangspfade 1 und 2 als defekt kennzeichnet.

**Patentansprüche**

1. Verfahren zur Funktionsprüfung von Empfangspfaden in einer Funkstation (BS) eines Funk-Kommunikationssystems, die mindestens zwei Antenneneinrichtungen (AE1, AE2) für einen Diversitätsempfang von über eine Funkschnittstelle gesendeten Signale aufweist, bei dem

   - für die Empfangspfade jeweils zumindest ein charakteristischer Wert (rssi1, rssi2, snr1, snr2) bezüglich von Übertragungsbedingungen der Funkschnittstelle ermittelt wird,

- eine Differenz (diffrssi, diffsnr) zwischen den ermittelten charakteristischen Werten (rssi1, rssi2, snr1, snr2) mit zumindest einem Schwellenwert (trssimax, trssimin, tsnrmax) verglichen wird, falls ein Vergleich des jeweils ermittelten charakteristischen Wertes (rssi1, rssi2, snr1, snr2) mit einem weiteren Schwellenwert (trssiler) ergibt, dass die charakteristischen Werte (rssi1, rssi2, snr1, snr2) den weiteren Schwellenwert (trssiler) überschreiten,
- wobei der Vergleich der Differenz mit dem zumindest einen Schwellwert während des normalen Betriebs der Funkstation (BS) durchgeführt wird,
- aus dem Vergleich der Differenz mit dem Schwellenwert die Funktion der Empfangspfade abgeleitet wird
- falls die ermittelten charakteristischen Werte (rssi1, rssi2, snr1, snr2) den weiteren Schwellenwert (trssiler) nicht überschreiten, die ermittelten charakteristischen Werte nicht berücksichtigt werden.

2. Verfahren nach Anspruch 1, bei dem ein Absolutbetrag der Differenz (diffrssi, diffsnr) berechnet und mit dem Schwellenwert (trssimax, trssimin, tsnrmax) verglichen wird.

3. Verfahren nach einem vorhergehenden Anspruch, bei dem die Differenz (diffrssi, diffsnr) zwischen den jeweils ermittelten charakteristischen Werten (rssi1, rssi2), snr1, snr2) mit einem oberen (trssimax, tsnrmax) und einem unteren Schwellenwert (trssimin) verglichen wird, und aus dem Vergleich die jeweilige Funktion der Empfangspfade abgeleitet wird.

4. Verfahren nach einem vorhergehenden Anspruch, bei dem die Differenz (diffrssi, diffsnr) zwischen Durchschnittswerten (rssi1avg, rssi2avg, snr1avg, snr2avg) der charakteristischen Werte (rssi1, rssi2, snr1, snr2) ermittelt wird, wobei die Durchschnittswerte (rssi1avg, rssi2avg, snr1avg, snr2avg) über ein vorgegebenes Zeitintervall (t) bestimmt werden.

5. Verfahren nach einem vorhergehenden Anspruch, bei dem als charakteristischer Wert eine Empfangsstärke (rssi1, rssi2) und/oder ein Signal-Rausch-Verhältnis (snr1, snr2) bestimmt wird.

6. Verfahren nach einem vorhergehenden Anspruch, bei dem bei einem Über- und/oder Unterschreiten des Schwellenwertes (trssimax, trssimin, tsnrmax) ein Alarmsignal generiert wird, das die Empfangspfade als defekt **kennzeichnet**.

7. Verfahren nach einem der Ansprüche 1 bis 5, bei dem bei einem Über- und/oder Unterschreiten des Schwellenwertes (trssimax, trssimin, tsnrmax) die Empfangspfade als defekt markiert werden.

8. Verfahren nach Anspruch 7, bei dem eine Gesamtsumme (sum) Markierungen für die Empfangspfade in dem vorgegebenen Zeitintervall (t) ermittelt und mit einem maximalen Summenschwellwert (summax) verglichen wird.

9. Verfahren nach einem der Ansprüche 1 bis 5, bei dem bei einem Über- und/oder Unterschreiten des Schwellenwertes (trssimax, trssimin, tsnrmax) der jeweilige Empfangspfad als defekt markiert wird.

10. Verfahren nach Anspruch 9, bei dem

- für die Empfangspfade eine jeweilige Summe (sum1, sum2) Markierungen in dem vorgegebenen Zeitintervall (t) ermittelt wird,
- eine Gesamtsumme (sum) der jeweiligen Summen (sum1, sum2) Markierungen für die Empfangspfade berechnet wird, und
- die Gesamtsumme (sum) mit einem maximalen Summenschwellenwert (summax) verglichen wird.

11. Verfahren nach Anspruch 8 oder 10, bei dem bei einem Überschreiten des maximalen Summenschwellenwertes (summax) ein Alarmsignal generiert wird, das die Empfangspfade als defekt **kennzeichnet**.

12. Verfahren nach Anspruch 10, bei dem

- bei einem Überschreiten des maximalen Summenschwellenwertes (summax) die jeweiligen Summen (sum1, sum2) Markierungen miteinander verglichen werden, und
- aus dem Vergleich ein Alarmsignal generiert wird, das den einen Empfangszweig und/oder den anderen Empfangszweig als defekt **kennzeichnet.**

13. Verfahren nach einem vorhergehenden Anspruch, bei dem in dem Funk-Kommunikationssystem eine Teilnehmerseparierung gemäß einem TDMA-Teilnehmerseparierungsverfahren durchgeführt wird, wobei die charakteristischen Werte (rssi1, rssi2, snr1, snr2) in jeweils zumindest einem Zeitschlitz (ts) ermittelt werden.

14. Verfahren nach einem vorhergehenden Anspruch, bei dem in dem Funk-Kommunikationssystem eine Teilnehmerseparierung gemäß einem CDMA-Teilnehmerseparierungsverfahren durchgeführt wird.

**15.** Funkstation (BS) eines Funk-Kommunikationssystems, mit

- mindestens zwei Antenneneinrichtungen (AE) für einen Diversitätsempfang von über eine Funkschnittstelle gesendeten Signale,

  - einer Empfangseinrichtung (EE) zum Verarbeiten der empfangenen Signale, und
  - einer Steuereinrichtung (ST)

    - zum Ermitteln von jeweils zumindest einem charakteristischen Wert (rssi1, rssi2, snr1, snr2) bezüglich von Übertragungseigenschaften der Funkschnittstelle für die Empfangspfade,
    - zum Vergleichen einer Differenz (diffrssi, diffsnr) zwischen den ermittelten charakteristischen Werten (rssi1, rssi2, snr1, snr2) mit zumindest einem Schwellenwert (trssimax, trssimin, tsnrmax) während des normalen Betriebs der Funkstation (BS), falls ein vergleich des jeweils ermittelten charakteristischen Wertes (rssi1, rssi2, snr1, snr2) mit einem weiteren Schwellenwert (trssiler) ergibt, dass die charakteristischen Werte (rssi1, rssi2, snr1, snr2) den weiteren Schwellenwert (trssiler) überschreiten, andernfalls werden die charakteristischen Werte nicht berücksichtigt und
    - zum Ableiten der Funktion der Empfangspfade aus dem Vergleich der Differenz mit dem Schwellenwert.

**16.** Funkstation (BS) nach Anspruch 15, mit einem Timer (T) zum periodischen Ermitteln der charakteristischen Werte (rssi1, rssi2, snr1, snr2) in einem vorgegebenen Zeitintervall (t).

**17.** Funkstation (BS) nach Anspruch 15 oder 16, die als eine Basisstation eines Mobilfunksystems oder eines drahtlosen Teilnehmeranschlusssystems verwirklicht ist.

**Claims**

**1.** Method for checking the functions of receive paths in a base station (BS) of a radio communication system, featuring at least two antenna devices (AE1,AE2) for a diversity reception of a signal sent over a radio interface,
in which

- for the receive paths at least one characteristic value(rssil, rssi2, snr1, snr2) relating to transmission conditions of the radio interface is determined in each case,
- a difference (diffrssi, diffsnr) between the characteristic values determined (rssi1, rssi2, snr1, snr2) is compared with at least one threshold value (trssimax, trssimin, tsnrmax) if a comparison the characteristic value determined in each case (rssi1, rssi2, snr1, snr2) with a further threshold value (trssi1er) indicates that the characteristic values (rssi1, rssi2, snr1, snr2) exceed the further threshold value (trssi1er),
- where the comparison of the difference with the at least one threshold value is undertaken during normal operation of the base station (BS),
- the function of the receive paths is derived from the comparison of the difference with the threshold value,
- if the characteristic values determined (rssi1, rssi2, snr1, snr2) do not exceed the further threshold value (trssi1er), the characteristic values determined are not taken into consideration.

**2.** Method in accordance with Claim 1, in which an absolute amount of the difference (diffrssi, diffsnr) is calculated and is compared to the threshold value (trssimax, trssimin, tsnrmax).

**3.** Method in accordance with one of the previous claims, in which the difference (diffrssi, diffsnr) between the characteristic values determined (rssi1, rssi2), snr1, snr2) in each case is compared to an upper (trssimax, tsnrmax) and a lower threshold value (trssimin) and from the comparison the relevant function of the receive paths is derived.

**4.** Method in accordance with a previous claim, in which the difference (diffrssi, diffsnr) between average values (rssilavg, rssi2avg, snr1avg, snr2avg) of the characteristic values (rssi1, rssi2, snr1, snr2) is determined, where the average values (rssilavg, rssi2avg, snr1avg, snr2avg) are determined over a presepecified time interval (t).

**5.** Method in accordance with a previous claim, in which a receive strength (rssi1, rssi2) and/or a signal-to-noise ratio (snr1, snr2) is determined as a characteristic value.

**6.** Method in accordance with a previous claim, in which, if the threshold value (trssimax, trssimin, tsnrmax) is exceeded and/or undershot, an alarm signal is generated which identifies the receive paths as defective.

**7.** Method In accordance with one of the claims 1 to 5 in which, if the threshold value(trssimax, trssimin, tsnrmax) is exceeded and/or undershot, the receive paths are marked as defective.

8. Method in accordance with Claim 7, in which a sum of markings for the receive paths is determined in the specified time interval (t) and is compared with a maximum sum threshold value (summax).

9. Method in accordance with one of the claims 1 to 5, in which, if the threshold value (trssimax, trssimin, tsnrmax) is exceeded and/or undershot, the relevant receive buffer is marked as defective.

10. Method in accordance with Claim 9, in which

    - for the receive paths a relevant sum (sum1, sum2) of markings in the specified time interval (t) is determined,
    - an overall sum of the relevant sums (sum1, sum2) of markings is calculated for the receive paths, and
    - the overall sum is compared with a maximum threshold value sum (summax).

11. Method in accordance with Claim 8 or 10, in which if the maximum threshold value sum (summax) is exceeded an alarm signal is generated identifying the receive paths as defective.

12. Method in accordance with Claim 10, in which

    - if the maximum threshold value sum (summax) is exceeded, the relevant sums (sum1, sum2) of markings are compared with one another and
    - an alarm signal is generated from the comparison identifying either one branch and/or the other branch of the receive path of defective..

13. Method in accordance with the previous claims in which a subscriber separation in accordance with the TDMA Subscriber separation procedure is performed in the radio communications system, whereby the characteristic values (rssi1, rssi2, snr1, snr2) in at least one timeslot (ts) are determined in each case.

14. Method in accordance with the previous claims in which a subscriber separation is performed in radio communications system in accordance with a CDMA subscriber separation method.

15. Base station (BS) of a radio communication system, with

    - at least two antenna devices (AE) for a diversity reception of signals sent over a radio interface,
    - a receive device (EE) for processing at the received signals, and
- a control device (ST)

    - to determine at least one characteristic value (rssi1, rssi2, snr1, snr2) in each case relating to the transmission characteristics of the radio interface for the receive paths,
    - for comparison of a difference (diffrssi,diffsnr) between the characteristic values determined (rssi1, rssi2, snr1, snr2) with at least one threshold value (trssimax, trssimin, tsnrmax) during normal operation of the base station (BS), if a comparison of the characteristic values determined (rssi1, rssi2, snr1, snr2) in each case with a further threshold value (trssi1er) indicates that the characteristic values (rssi1, rssi2, snr1, snr2) exceed the further threshold value (trssi1er), otherwise the characteristic values are not taken into account and
    - for deriving the function of the receive paths from the comparison of the difference with the threshold value.

16. Base station (BS) in accordance with Claim 15, with a timer (T) for periodically determining the characteristic values (rssi1, rssi2, snr1, snr2) in a specified time interval (t).

17. Base station (BS) in accordance with Claim 15 or 16 which is realized as a base station of a mobile radio system or of a wireless subscriber access system.

**Revendications**

1. Procédé pour contrôler le fonctionnement des chemins de réception dans une station radio (BS) d'un système de communication radio, qui présente au moins deux systèmes d'antenne (AE1, AE2) pour une réception en diversité de signaux émis au moyen d'une interface radio,
   dans lequel

    - pour les chemins de réception, on détermine respectivement au moins une valeur caractéristique (rssi1, rssi2, snr1, snr2) par rapport à des conditions de transmission de l'interface radio,
    - une différence (diffrssi, diffsnr) entre les valeurs caractéristiques déterminées (rssi1, rssi2, snr1, snr2) étant comparée avec au moins une valeur seuil (trssimax, trssimin, tsnrmax) si une comparaison de la valeur caractéristique respectivement déterminée (rssi1, rssi2, snr1, snr2) avec une autre valeur seuil (trssiler) fait apparaître que les valeurs caractéristiques (rssi1, rssi2, snr1, snr2) dépassent l'autre valeur seuil (trssiler),

- la comparaison de la différence avec la au moins une valeur seuil étant effectuée pendant l'exploitation normale de la station radio (BS),

- à partir de la comparaison de la différence avec la valeur seuil, on déduit le fonctionnement des chemins de réception,

- si les valeurs caractéristiques déterminées (rssi1, rssi2, snr1, snr2) ne dépassent pas l'autre valeur seuil (trssiler), les valeurs caractéristiques déterminées ne. sont pas prises en compte.

2. Procédé selon la revendication 1, dans lequel une valeur absolue de la différence (diffrssi, diffsnr) est calculée et comparée avec la valeur seuil (trssimax, trssimin, tsnrmax).

3. Procédé selon une revendication précédente, dans lequel la différence (diffrssi, diffsnr) entre les valeurs caractéristiques déterminée (rssi1, rssi2, snr1, snr2) est comparée avec une valeur seuil supérieure (trssimax, tsnrmax) et une valeur seuil inférieure (trssimin), et la fonction respective des chemins de réception est déduite de la comparaison.

4. Procédé selon une revendication précédente, dans lequel la différence (diffrssi, diffsnr) entre des valeurs moyennes (rssi1avg, rssi2avg, snr1avg, snr2avg) des valeurs caractéristiques (rssi1, rssi2, snr1, snr2) est déterminée, les valeurs moyennes (rssi1avg, rssi2avg, snr1avg, snr2avg) étant déterminées pour un créneau temporel (t) prédéfini.

5. Procédé selon une revendication précédente, dans lequel une intensité de réception (rssi1, rssi2) et/ou un rapport signal-bruit (snr1, snr2) est déterminée comme valeur caractéristique.

6. Procédé selon une revendication précédente, dans lequel, en cas d'un dépassement et/ou d'un sous-dépassement de la valeur seuil (trssimax, trssimin, tsnrmax), un signal d'alarme est généré qui identifie les chemins de réception comme étant défectueux.

7. Procédé selon l'une quelconque des revendications 1 à 5, dans lequel, en cas d'un dépassement et/ou d'un sous-dépassement de la valeur seuil (trssimax, trssimin, tsnrmax), les chemins de réception sont marqués comme étant défectueux..

8. Procédé selon la revendication 7, dans lequel une somme totale (sum) de marquages est déterminée pour les chemins de réception dans le créneau temporel (t) prédéfini et comparée avec une valeur seuil cumulée maximale (summax).

9. Procédé selon l'une quelconque des revendications 1 à 5, dans lequel le chemin de réception respectif est marqué comme défectueux dans le cas d'un dépassement et/ou d'un sous-dépassement de la valeur seuil (trssimax, trssmin, tsnrmax).

10. Procédé selon la revendication 9, dans lequel

- une somme respective (sum1, sum2) de marquages est déterminée pour les chemins de réception dans le créneau temporel (t) prédéfini,

- une somme totale (sum) des sommes respectives (sum1, sum2) de marquages est calculée pour les chemins de réception, et

- la somme totale (sum) est comparée avec une valeur seuil cumulée maximale (summax).

11. Procédé selon la revendication 8 ou 10, dans lequel, en cas d'un dépassement de la valeur seuil cumulée maximale (summax), un signal d'alarme est généré qui identifie les chemins de réception comme étant défectueux.

12. Procédé selon la revendication 10, dans lequel

- les sommes respectives (sum1, sum2) de marquages sont comparées entre elles dans le cas d'un dépassement de la valeur seuil cumulée maximale (summax), et

- à partir de la comparaison, un signal d'alarme est généré qui identifie comme défectueuse une branche de réception et/ou l'autre branche de réception.

13. Procédé selon une revendication précédente, dans lequel on effectue une séparation d'abonnés selon un procédé de séparation d'abonnés AMRT dans le système de communication radio, les valeurs caractéristiques (rssi1, rssi2, snr1, snr2) étant déterminées dans respectivement au moins un créneau temporel (ts).

14. Procédé selon une revendication précédente, dans lequel une séparation d'abonnés est effectuée dans le système de communication radio selon un procédé de séparation d'abonnés AMRC.

15. Station radio (BS) d'un système de communication radio, comprenant

- au moins deux systèmes d'antenne (AE) pour une réception en diversité de signaux émis au moyen d'une interface radio,

- un appareil de réception (EE) pour le traitement des signaux reçus et,

- un appareil de commande (ST)

- pour déterminer respectivement au moins une valeur caractéristique (rssi1, rssi2, snr1, snr2) par rapport à des propriétés de transmission de l'interface radio pour les chemins de réception,

- pour la comparaison d'une différence (diffrssi, diffsnr) entre les valeurs caractéristiques déterminées (rssi1, rssi2, snr1, snr2) avec au moins une valeur seuil (trssimax, trssimin, tsnrmax) pendant l'exploitation normale de la station radio (BS) si une comparaison de la valeur caractéristique respectivement déterminée (rssi1, rssi2, snr1, snr2) avec une autre valeur seuil (trssiler) fait apparaître que les valeurs caractéristiques (rssi1, rssi2, snr1, snr2) dépassent l'autre valeur seuil (trssiler), autrement les valeurs caractéristiques ne sont pas prises en compte et

- pour déduire le fonctionnement des chemins de réception de la comparaison de la différence avec la valeur seuil.

16. Station radio (BS) selon la revendication 15, avec une minuterie (T) pour la détermination périodique des valeurs caractéristiques (rssi1, rssi2, snr1, snr2) dans un créneau temporel (t) prédéfini.

17. Station radio (BS) selon la revendication 15 ou 16, qui est réalisée comme une station de base d'un système de téléphonie mobile ou d'un système de raccordement d'abonné sans fil.

# FIG 1

FIG 2

B

fk

ts ──── ts0 ──────────────────── ts7 ──→ t

(TDMA)

| d | tseq | d | gp |

FIG 3

B B SP

E

fk

ts ──── ts0 · · · ──────────── ts15 ──→ t

(TDMA)

| d | tseq1 | d | gp |

| 1 | 2 | 3 | d | n | tseqn | 1 | 2 | 3 | d | n | gp |

c

(CDMA)

| 1 | 2 | 3 | 4 | Q |

tchip

tsym=Q*tchip

# FIG 4

Empfangspfad 1 ⏐
(von AE1)

⏐ Empfangspfad 2
(von AE2)

| rssi1 | rssi2 |
|-------|-------|

$$diffrssi = ABS(rssi1 - rssi2)$$

Ja

diffrssi > trssimax
?

Nein

Alarmsignal
Empfangspfad
1 oder 2 defekt

## FIG 5

Empfangspfad 1
(von AE1)

Empfangspfad 2
(von AE2)

| rssi1 | rssi2 |
|-------|-------|

Ja ← rssi2 > trssilev
oder
rssi1 > trssilev
? → Nein

| rssi1avg | rssi2avg |
|----------|----------|

diffrssi = ABS(rssi1avg - rssi2avg)

Ja ← diffrssi > trssimax
? → Nein

Alarmsignal
Empfangspfad
1 oder 2 defekt

Timer T(t)

# FIG 6

# FIG 7

Empfangspfad 1
(von AE1)

Empfangspfad 2
(von AE2)

| rssi1(ts) | rssi2(ts) | snr1(ts) | snr2(ts) |
|---|---|---|---|

| rssi1avg(ts) | rssi2avg(ts) | snr1avg(ts) | snr2avg(ts) |
|---|---|---|---|

diffrssi(ts) = ABS(rssi1avg(ts) - rssi2avg(ts))

diffsnr(ts) = ABS(snr1avg(ts) - snr2avg(ts))

Ja — diffrssi(ts) > trssimax ? — Nein

ODER

Ja — diffsnr(ts) > tsnrmax ? — Nein

Markierung
Empfangspfad 1
oder 2 defekt

UND

Markierung
Empfangspfad 1
und 2 OK

sum
Markierungen

Ja — sum > summax ? — Nein

Alarmsignal
Empfangspfad
1 oder 2 defekt

# FIG 8

Empfangspfad 1                      Empfangspfad 2
(von AE1)                           (von AE2)

| rssi1 | rssi2 |

| rssi1avg | rssi2avg |

diffrssi = rssi1avg - rssi2avg

diffrssi < trssimin ?
    Ja          Nein

diffrssi > trssimax ?
    Ja          Nein

Markierung Empfangspfad 1

Markierung Empfangspfad 2

sum1 Markierungen

sum2 Markierungen

sum = sum1 + sum2

sum > summax ?
    Ja          Nein

sum1 >> sum2 ?
    Ja          Nein

sum2 >> sum1 ?
    Ja          Nein

Alarmsignal Empfangspfad 1 defekt

Alarmsignal Empfangspfad 2 defekt

Alarmsignal Empfangspfad 1 und 2 defekt